# EUROPÄISCHE PATENTSCHRIFT

(11) **EP 0 754 844 B1**
(45) Veröffentlichungstag und Bekanntmachung des Hinweises auf die Patenterteilung: **19.05.1999**
(21) Anmeldenummer: 96109743.3
(22) Anmeldetag: 18.06.1996
(51) Int. Cl.: F02B 43/10

(54) **Verfahren zur Reduzierung von Stickoxiden bei Wasserstoffmotoren**
Process for reducing the nitrogenoxides in hydrogen engines
Procédé pour la réduction des oxides de nitrogène dans des moteurs à hydrogène

(30) Priorität: 19.07.1995 DE 19526319
(43) Veröffentlichungstag der Anmeldung: 22.01.1997
(73) Patentinhaber: MAN Nutzfahrzeuge Aktiengesellschaft, 80995 München (DE)
(72) Erfinder: Prümm, Werner, Dipl.-Ing., 90480 Nürnberg (DE); Steinert, Ralf, Dipl.-Ing., 90459 Nürnberg (DE); Knorr, Herbert, Dipl.-Ing., 91126 Rednitzhembach (DE)

(56) Entgegenhaltungen:
- EP-A- 0 537 968
- GB-A- 2 092 911
- GB-A- 2 124 298
- US-A- 5 183 011

## Beschreibung

Die Erfindung bezieht sich auf ein Verfahren zur Reduzierung von Stickoxiden bei Wasserstoffmotoren, welche mit einem Gemisch von Luft und Wasserstoff arbeiten.

Wasserstoffmotoren werden üblicherweise mit einem Gemisch aus Luft und Wasserstoff betrieben. Das Luftverhältnis λ wird etwas größer als 1 gewählt, um eine vollständige Verbrennung zu gewährleisten. Bei Wasserstoffmotoren dieser Art werden neben dem Verbrennungsprodukt Wasserdampf auch Stickoxide gebildet, welche unter dem Einfluß hoher Verbrennungstemperaturen durch Reaktion des Luftstickstoffes mit dem überschüssigen Restsauerstoff entstehen.

Nach DE 40 00 761 A1 wird vorgeschlagen, Wasserstoffmotoren mit einem stöchiometrischen Gemisch von Wasserstoff und Sauerstoff unter Zugabe von Edelgas als Expansionsmedium zu betreiben. Bei einem Verfahren dieser Art ist die Bildung von Stickoxiden natürlich ausgeschlossen. Allerdings muß das Edelgas in einem geschlossenen Kreislauf geführt werden. Dies erfordert eine aufwendige Rückkühlanlage für die Auspuffgase, was für Fahrzeugmotoren zu teuer und zu voluminös wäre.

Ausgehend von Wasserstoffmotoren, welche mit einem Gemisch von Luft und Wasserstoff arbeiten liegt der Erfindung die Aufgabe zugrunde, den Ausstoß von Stickoxiden mit geringem baulichen Aufwand zu reduzieren.

Gelöst wird diese Aufgabe dadurch, daß stets mit einem Luftverhältnis λ < 1 gefahren wird, und daß das Abgas über einen Katalysator geleitet wird.

Dadurch, daß stets mit einem geringfügigen Überschuß an Wasserstoff gefahren wird, werden die, während der Verbrennung entstandenen Anteile von NOₓ im Abgas im nachgeschalteten Katalysator durch den nicht verbrannten Wasserstoff unter Bildung von H₂O und N₂ reduziert.

Mit geringem baulichen Aufwand wird erreicht, daß Wasserstoffmotoren mit hoher volumetrischer Leistung nahezu frei von schädlichen Abgasen betrieben werden können.

## Patentansprüche

1. Verfahren zur Reduzierung von Stickoxiden bei Wasserstoffmotoren, welche mit einem Gemisch von Luft und Wasserstoff arbeiten, dadurch gekennzeichnet, daß stets mit einem Luftverhältnis λ < 1 gefahren wird und daß das Abgas über einen Katalysator geleitet wird.

## Claims

1. Procedure for reducing oxides of nitrogen in hydrogen engines running on a mixture of air and hydrogen, characterised in that an air mixture ratio of λ < 1 is used and that the exhaust gases are channelled through a catalytic converter.

## Revendications

1. Procédé servant à réduire les oxydes d'azote dans le cas des moteurs à hydrogène qui fonctionnent avec un mélange d'air et d'hydrogène,
caractérisé en ce que
- l'on marche en permanence avec une proportion d'air λ < 1 et
- les gaz d'échappement sont dirigés sur un catalyseur.
